Europäisches Patentamt

European Patent Office

Office européen des brevets

(11) Publication number: **0 259 088 B1**

(12) **EUROPEAN PATENT SPECIFICATION**

(45) Date of publication of patent specification: **09.06.93** (51) Int. Cl.⁵: **C09D 11/00**

(21) Application number: **87307503.0**

(22) Date of filing: **25.08.87**

(54) Ink-jet printing inks.

(30) Priority: **27.08.86 US 900953**
**27.08.86 US 900664**
**05.02.87 US 11186**
**05.02.87 US 11190**

(43) Date of publication of application:
**09.03.88 Bulletin 88/10**

(45) Publication of the grant of the patent:
**09.06.93 Bulletin 93/23**

(84) Designated Contracting States:
**DE FR GB IT**

(56) References cited:
**EP-A- 0 184 556**
**EP-A- 0 216 296**
**DE-A- 3 521 129**
**GB-A- 1 318 111**

**CHEMICAL ABSTRACTS, vol. 105, no. 4, 28th July 1986, page 96, abstract no. 25977y, Columbus, Ohio, US; & JP-A-60 243 174**

(73) Proprietor: **Hewlett-Packard Company**
**Mail Stop 20 B-O, 3000 Hanover Street**
**Palo Alto, California 94304(US)**

(72) Inventor: **Askeland, Ronald A.**
**11371 Penanoya St.**
**San Diego, CA 92129(US)**
Inventor: **Kappele, William D.**
**2240 Bear Valley Pkway No. 30**
**Escondido, CA 92027(US)**
Inventor: **Stoffel, John L.**
**4391 Caminito de Diomante**
**San Diego, CA 92121(US)**
Inventor: **Pawlowski, Norman E.**
**1455 NW 13th**
**Corvallis, OR 97330(US)**

(74) Representative: **Colgan, Stephen James et al**
**CARPMAELS & RANSFORD 43 Bloomsbury Square**
**London WC1A 2RA (GB)**

Rank Xerox (UK) Business Services
(3.10/3.6/3.3.1)

**Description**

TECHNICAL FIELD

The present invention relates to ink compositions for ink-jet printers, and, more particularly, to ink compositions in which the solubility of the dye is increased by replacement of cations such as sodium and potassium.

BACKGROUND ART

The use of aqueous-based inks for ink-jet printers is well-known. Such compositions are relatively inexpensive and easy to prepare; typically, the ink comprises water and a glycol ether, usually diethylene glycol (commonly referred to as the vehicle), and a dye. Typically, the water and glycol ether are present in generally the same proportion and the dye, for example, Food Black 2, is present up to about 6% of the total composition, depending on the desired density of the print.

The prior art inks generally use existing commercial dye salts (cation plus dye anion) as formed, which are simply dissolved in the vehicle and filtered to prepare the ink. Such dyes, which generally contain a plurality of sulfonate or carboxylate anion groups, are designed to form solids in paper or cloth, employing cations such as sodium cations. Consequently, the dyes do not easily remain liquid in the orifice of an ink-jet printer.

Thus, a persistent problem associated with aqueous-based inks is their propensity to crust over a period of time, eventually leading to plugging of the orifice in the printer mechanism from which droplets of ink are expelled in the printing operation. Crusting is the crystallization of the ink around the orifice in the print head, causing partial or full blockage of the orifice, leading to misdirection of the drop (partial blockage) or prevention of drop ejection (full blockage). The crusting problem arises from the evaporation of the water from the ink solvent (vehicle) and the consequent precipitation of the dye salt which has become substantially insoluble as a result of this water loss.

Attempts have been made to solve the crusting problem. Hygroscopic agents have been added to reduce the rate of water evaporation by their ability to pick up water vapor from the air. Exemplary of such hygroscopic agents are water-soluble polymers, alkanol amines, amides and polyhydric alcohols.

While some improvement has been realized with these hygroscopic agents, a total solution to the crusting problems has not yet been achieved. Further, apparently no methods are known to prevent crusting of the anionic dyes in mildly acidic to mildly basic aqueous-based inks (pH 4 to 9).

Attempts are continuing to develop inks in which the dye solubility is increased.

Other approaches include developing new dyes for ink-jet inks. For example, U.S. Patent 4,557,761 discloses a variety of sulfonate-containing dyes with cations such as sodium, potassium, lithium, ammonium and amine salt cations.

However, as shown above, dyes with sodium cations have certain deficiencies. Dyes with potassium cations also suffer from certain deficiencies, notably evidencing crusting. Dyes with ammonium cations, on the other hand, are not stable. Thus, the cations listed in U.S. Patent 4,557,761 cannot be considered to be equivalent.

Finally, many cations are not suitable for dyes employed in inks used in thermal ink-jet printing. In this instance, a problem known as kogation may occur. Kogation is a coined term, unique to thermal ink-jet printing, and describes the extent of decomposition of the ink on the resistors of thermal ink-jet printers as a consequence of heating. Such heating is used to form droplets of ink, which are propelled toward the substrate.

While sodium-containing dyes evidence crusting problems, they also evidence superior kogation properties. Dyes containing other cations which evidence improved crusting also often evidence poor kogation.

DISCLOSURE OF INVENTION

Accordingly, it is an object of the present invention to provide an ink composition evidencing increased dye solubility in the vehicle.

It is an object of this invention to provide an ink in which the crusting problem is minimal.

It is another object of this invention to provide an aqueous-based ink for ink-jet printers in which kogation of the dye in the ink solvent (vehicle) is not adversely affected by partial or total replacement of sodium or other cations.

2

It is a further object of this invention to provide an aqueous-based ink for ink-jet printers in which the solubility of anionic dyes in mildly acidic to mildly basic media is increased.

Briefly, the ink composition of the invention comprises a vehicle and a dye having at least one negatively charged functional group per molecule, at least one of the functional groups being associated with cations, and at least one-fourth of said cations being tetramethylammonium (TMA) or lithium cations.

The dye containing TMA or lithium cations evidences increased solubility and reduced crusting in inks commonly used in ink-jet printing, yet shows no tendency toward kogation in thermal ink-jet printing.

BEST MODES FOR CARRYING OUT THE INVENTION

The ink compositions of the invention comprise an aqueous-based vehicle and a dye. The pH of the ink may be maintained in the both the mildly acidic and mildly basic regions, ranging from about 4 to 9.

The vehicle of the ink comprises water and at least one of the glycols and glycol ethers commonly employed in the inks used in ink-jet printing. Examples of such compounds include diethylene glycol, triethylene glycol and polyethylene glycols. The water is present in an amount ranging from about 5 to 95%, the balance being at least one of the glycols and/or glycol ethers. Preferably, the vehicle comprises about 50% water and the balance a glycol ether such as diethylene glycol.

To the vehicle is added up to about 0.1 Molar of a dye, preferably an anionic dye. The amount of the dye added is a function of choice, being largely dependent upon the solubility of the dye in the vehicle (which limits the upper range of dye concentration) and the desired density of the print achieved with the ink (which limits the lower range of dye concentration - typically about 0.005 Molar). Preferably, the concentration of the dye in the ink composition is about 0.065 Molar. For Food Black 2, a dye commonly used in ink-jet inks, the corresponding concentration in wt% ranges from about 0.5 to 10%, with about 6% being preferred.

The dye to which the invention is suitably applied is an organic molecule having at least one negatively charged functional group per molecule. Since sulfonate ($SO_3^-$) and carboxylate ($CO_3^-$) groups are especially benefitted from the practice of the invention, dyes having such groups are preferred. An example of a preferred dye in this regard is Food Black 2 (FB2), which has a mixture of two, three and four sulfonate groups per molecule. (The effective value is about 3.2 sulfonate groups per molecule for commercially available FB2.)

In commercially-prepared dyes, the negative charge of the functional group is most commonly balanced by the presence of positively charged sodium ($Na^+$). However, other cations, such as potassium, ammonium, etc., may also be present.

Other anionic dyes in addition to FB2 may also be suitably employed in the practice of the invention, since, as will be discussed in further detail below, the solubility of the anionic dyes is increased in acidic media by employing the teachings of the invention. Examples of other anionic dyes which may be employed in the ink composition disclosed herein include Direct Red 9, Direct Red 227, Acid Yellow 23, Direct Yellow 86, Acid Blue 9, Direct Blue 86, Direct Blue 199 and Acid Blue 185.

In accordance with the invention, a thermal ink-jet printer ink composition is provided comprising:

(a) a vehicle comprising about 5 to 95% water and the balance at least one glycol and/or glycol ether; and

(b) a dye having at least one negatively charged functional group per molecule, at least one of the functional groups being associated with cations, and at least a quarter of said cations being tetramethyl ammonium or lithium.

The dye is prepared by partial replacement of undesirable cations in the dye as received from the manufacturer by lithium or tetramethylammonium cations.

While sodium and potassium are considered examples of such undesirable cations, there may be other cations associated with the dye as obtained from a dye manufacturere which may be beneficially replaced in accordance with the teachings of this invention. All such replaceable cations are considered herein to be undesirable cations.

The presence of tetramethylammonium (TMA) or lithium cations increases the solubility of the dye in the vehicle without adversely affecting kogation in thermal ink-jet printers. The presence of TMA or lithium cations also reduces crusting of the ink around the orifices of the ink-jet printer, such crusting being caused by evaporation of the water in the vehicle of the ink upon exposure to air.

The partial or complete replacement of undesirable cations by TMA or lithium cations may be accomplished by a variety of methods, exemplary of which are ion exchange and reverse osmosis.

In the ion exchange reaction, the dye with undesirable cations, such as sodium cations, is passed through an acid-loaded ion exchange resin. The undesirable cations are replaced with hydrogen cations.

The ion-exchanged dye is then reacted with tetramethylammonium hydroxide (TMA$^+$ OH$^-$) or lithium hydroxide (LiOH). The TMA or lithium cations replace the hydrogen cations, which react with the hydroxide anions to form water.

Preferably, at least about one-fourth of the undesirable cations are replaced by TMA or lithium cations in order to obtain the benefits disclosed herein. However, most preferably, in the case of TMA cations, at least about one-half of the undesirable cations are replaced in order to obtain the best combination of properties. In the case of lithium cations, preferably substantially all of the sodium cations are replaced for the best combination of properties.

It has been observed that the more the TMA or lithium replacement for sodium, the better the color density achievable. Further, with TMA cation replacement, low temperature start-up (an indication of the ability for the first drop of ink to fire when the printer has been idle for a period of time) is improved.

The presence of TMA or lithium permits a concentration of dye up to about 0.1 Molar. Above this level, the viscosity of the ink is undesirably high. For practical purposes and economy, the maximum amount of TMA-dye or Li-dye is about 0.065 Molar; above this level, the color density increases only very slowly.

A slight excess of TMA or lithium (about 5 to 10%) may be present in the ink to provide the manufacturer with a margin when making the TMA or lithium form of the dye.

INDUSTRIAL APPLICABILITY

The TMA- and lithium-substituted dyes provided in accordance with the invention find use in inks used in ink-jet printing, particularly in thermal ink-jet printing.

EXAMPLES

A series of dyes were prepared, employing Food Black 2, which originally had all anionic sites complexed with sodium cations. The vehicle comprised diethylene glycol (DEG) and water in the concentrations given below. In the inks listed in Table I below, the dye concentration is given in terms of millimolarity. Comparisons are made with substitutions of sodium cations ranging from no replacement to partial replacement to full replacement by tetramethylammonium (TMA) or lithium cation. For comparison, full replacement by ammonium cation ($NH_4$) and potassium (K) are also given.

TABLE I.

| Example | Cation | % Na Replacement | Concentration, mM |
|---------|--------|------------------|-------------------|
| 1 | Na | -- | 39 |
| 2 | TMA | 50 | 39 |
| 3 | TMA | 100 | 39 |
| 4 | TMA | 100 | 52 |
| 5 | TMA | 100 | 65 |
| 6 | Li | 100 | 39 |
| 7 | Li | 100 | 52 |
| 8 | Li | 100 | 65 |
| 9 | $NH_4$ | 100 | 39 |
| 10 | K | 100 | 39 |

The properties of solubility, crusting, room temperature (RT) and low temperature (LT) start-up, kogation, storage and change in color density ( $\Delta E$ ) are listed in Table II below. The solubility is shown for two vehicle concentrations, 50/50 DEG/$H_2O$ and 90/0 DEG/$H_2O$.

Start-up is measured for pens exposed for a period of time to a temperature [room (RT) or 10°C (LT)] at low relative humidity (RH) to determine whether water loss has been sufficient to cause a significant decrease in the quality of drop ejections.

Storage refers to the stability of chemical and physical properties during storage.

$\Delta E$ is a measure of color density. If the color is measured in CIELAB coordinates, then $\Delta E$ is given by

$$\Delta E = [(L_2 - L_1)^2 + (a_2 - a_1)^2 + (b_2 - b_1)^2]^{1/2}$$

where L, a and b are coordinates of reference in CIELAB space and 1 refers to the background medium and 2 refers to the sample.

## TABLE II.

| Example | Solubility 50/50 | Solubility 90/10 | Crusting | Start-up RT | Start-up LT | Kogation | Storage | ΔE |
|---|---|---|---|---|---|---|---|---|
| 1 | F | F | P | G | F | G | G | F |
| 2 | | | G | | | | G | G | F |
| 3 | E | E | E | E | E | G | G | F |
| 4 | E | E | G | E | G | G | | G |
| 5 | E | E | G | G | G | | | E |
| 6 | E | E | E | | | G | G | F |
| 7 | E | E | E | | | | | E |
| 8 | E | E | E | | | G | | E |
| 9 | | | | | | | P | |
| 10 | | | P | | | | | F |

The foregoing relative observations are based on the following scale, with the definitions of each observation for each property as follows:

E = Excellent
G = Good
F = Fair
P = Poor.

A perusal of Table II above shows that solubility is enhanced in both 50/50 DEG/$H_2O$ and 90/10 DEG/$H_2O$ for replacement of sodium cations by tetramethylammonium or lithium cations. Further, kogation is not adversely affected by such replacement. Other properties of the inks containing TMA- or lithium-replaced dyes, such as crusting, start-up, storage and print quality are seen to be at least equivalent to those of inks containing sodium cations. Finally, comparison with replacement by other cations (K and $NH_4$) points up the improvement achieved with the substition of tetramethylammonium or lithium for the undesirable cations.

Thus, an ink composition for ink-jet printers has been provided. The ink comprises an anionic dye in which at least a portion of the associated cations are replaced with tetramethylammonium or lithium cations. Various changes and modifications will be readily apparent to those of ordinary skill in the art, and all such changes and modifications are considered to be within the scope of this invention.

# EP 0 259 088 B1

**Claims**

1. A thermal ink-jet printer ink composition comprising:
   (a) a vehicle comprising about 5 to 95% water and the balance at least one glycol or glycol ether; and
   (b) a dye having at least one negatively charged functional group per molecule, at least one of the functional groups being associated with cations and at least a quarter of said cations being tetramethyl ammonium or lithium.

2. A thermal ink-jet printer composition according to claim 1 wherein said cations further comprise sodium or potassium cations.

3. A thermal ink-jet printer ink composition according to claim 1 or 2 wherein said glycol or glycol ether is selected from diethylene glycol, triethylene glycol and polyethylene glycols.

4. A thermal ink-jet printer composition according to claim 3 wherein said vehicle consists essentially of diethylene glycol, present in an amount of about 50%, and the balance water.

5. A thermal ink-jet printer ink composition according to any of claims 1 to 4 wherein said dye includes at least one functional group per molecule selected from sulfonate and carboxylate groups.

6. A thermal ink-jet printer ink composition according to claim 5 wherein said dye is one selected from Food Black, 2, Direct Red 9, Direct Red 227, Acid Yellow 23, Direct Yellow 86, Acid Blue 9, Direct Blue 86, Direct Blue 199 and Acid Blue 185.

7. A thermal ink-jet printer ink composition according to claim 6 wherein said dye comprises Food Black 2.

8. A thermal ink-jet printer ink composition according to any preceding claim wherein at least one-half of said cations are tetramethylammonium.

9. A thermal ink-jet printer ink composition according to any of claims 1 to 7 wherein substantially all of said cations are lithium.

10. A process for increasing solubility of a dye without adversely affecting kogation in a thermal ink-jet printer ink composition comprising a vehicle and the dye, said vehicle comprising about 5 to 95% water and the balance at least one glycol or glycol ether and said dye comprising molecules having at least one negatively charged functional group per molecule, the functional groups being associated with sodium or potassium cations, the process comprising the step of replacing at least one quarter of the sodium or potassium cations by lithium or tetramethylammonium cations.

11. Use of a dye having at least one negatively charged functional group per molecule, at least one of the functional groups being associated with cations, and at least a quarter of said cations being tetramethyl ammonium or lithium, for the preparation of a thermal ink-jet printer ink, which ink further comprises a vehicle comprising about 5 to 95% water and the balance at least one glycol or glycol ether.

**Patentansprüche**

1. Tintenmischung für einen thermischen Tintenstrahldrucker, welche umfaßt:
   a) ein Bindemittel, das ungefähr 5 bis 95% Wasser und als Rest mindestens ein Glykol oder einen Glykolether enthält, und
   b) eine Farbe mit mindestens einer negativ geladenen funktionellen Gruppe pro Molekül, wobei mindestens eine der funktionellen Gruppen mit Kationen assoziiert ist und mindestens ein Viertel dieser Kationen Tetramethylammonium oder Lithium ist.

2. Tintenmischung für einen thermischen Tintenstrahldrucker nach Anspruch 1, bei der die Kationen weiterhin Natrium- oder Kaliumkationen umfassen.

6

**3.** Tintenmischung für einen thermischen Tintenstrahldrucker nach Anspruch 1 oder 2, bei der das Glykol oder der Glykolether aus Diethylenglykol, Triethylenglykol und Polyethylenglykolen gewählt ist.

**4.** Tintenmischung für einen thermischen Tintenstrahldrucker nach Anspruch 3, bei der das Bindemittel im wesentlichen aus Diethylenglykol, das in einer Menge von ungefähr 50% vorhanden ist, und Wasser als Rest besteht.

**5.** Tintenmischung für einen thermischen Tintenstrahldrucker nach einem der Ansprüche 1 bis 4, bei der die Farbe mindestens eine funktionelle Gruppe pro Molekül enthält, die aus Sulfonat- und Carboxylatgruppen gewählt ist.

**6.** Tintenmischung für einen thermischen Tintenstrahldrucker nach Anspruch 5, bei der die Farbe aus "Food Black 2", "Direct Red 9", "Direct Red 227", "Acid Yellow 23", "Direct Yellow 86", "Acid Blue 9", "Direct Blue 86", "Direct Blue 199" und "Acid Blue 185" gewählt ist.

**7.** Tintenmischung für einen thermischen Tintenstrahldrucker nach Anspruch 6, bei der die Farbe "Food Black 2" enthält.

**8.** Tintenmischung für einen thermischen Tintenstrahldrucker nach einem der vorangehenden Ansprüche, bei der mindestens die Hälfte der Kationen aus Tetramethylammonium besteht.

**9.** Tintenmischung für einen thermischen Tintenstrahldrucker nach einem der Ansprüche 1 bis 7, bei der im wesentlichen alle Kationen Lithium sind.

**10.** Verfahren zur Erhöhung der Löslichkeit einer Farbe, ohne die "Kogation" bei einer Tintenmischung für einen thermischen Tintenstrahldrucker nachteilig zu beeinflussen, welche ein Bindemittel und die Farbe enthält, wobei das Bindemittel ungefähr 5 bis 95% Wasser und als Rest mindestens ein Glykol oder einen Glykolether enthält und die Farbe Moleküle mit mindestens einer negativ geladenen funktionellen Gruppe pro Molekül enthält, wobei die funktionellen Gruppen mit Natrium- oder Kaliumkationen assoziert sind, wobei das Verfahren den Schritt enthält, mindestens ein Viertel der Natrium- oder Kaliumkationen durch Lithium- oder Tetramethylammoniumkationen zu ersetzen.

**11.** Verwendung einer Farbe mit mindestens einer negativ geladenen funktionellen Gruppe pro Molekül, wobei mindestens eine der funktionellen Gruppen mit Kationen assoziiert ist und mindestens ein Viertel der Kationen aus Tetramethylammonium oder Lithium besteht, für die Herstellung einer Tinte für einen thermischen Tintenstrahldrucker, wobei diese Tinte weiterhin ein Bindemittel enthält, das ungefähr 5 bis 95% Wasser und als Rest mindestens ein Glykol oder einen Glykolether enthält.

**Revendications**

**1.** Une composition d'encre pour imprimante thermique à jet d'encre comprenant :
(a) un véhicule comprenant environ 5 à 95 % d'eau, le reste étant au moins un glycol ou un glycol éther ; et
(b) une teinture ayant au moins un groupe fonctionnel chargé négativement par molécule, au moins l'un des groupes fonctionnels étant associé à des cations et au moins un quart desdits cations étant du tétraméthylammonium ou du lithium.

**2.** Une composition pour imprimante thermique à jet d'encre selon la revendication 1, dans laquelle lesdits cations comprennent en outre des cations de sodium ou de potassium.

**3.** Une composition d'encre pour imprimante thermique à jet d'encre selon la revendication 1 ou 2, dans laquelle ledit glycol ou glycol éther est sélectionné à partir du groupe composé du diéthylène glycol, de triéthylène glycol et des polyéthylènes glycols.

**4.** Une composition pour imprimante thermique à jet d'encre selon la revendication 3, dans laquelle ledit véhicule est essentiellement composé de diéthylène glycol, présent dans une quantité d'environ 50 %, le reste étant de l'eau

**5.** Une composition d'encre pour imprimante thermique à jet d'encre selon l'une des revendications 1 à 4, dans laquelle ladite teinture comprend au moins un groupe fonctionnel par molécule, sélectionné à partir des groupes sulfonates et carboxylates.

**6.** Une composition d'encre pour imprimante thermique à jet d'encre selon la revendication 5, dans laquelle ladite teinture est sélectionnée à partir du Noir Alimentaire 2 (Food Black 2), du Rouge Direct 9 (Direct Red 9), du Rouge Direct 227 (Direct Red 227), du Acide 23 (Acid Yellow 23), du Jaune Direct 86 (Direct Yellow 86), du Bleu Acide 9 (Acid Blue 9), du Bleu Direct 86 (Direct Blue 86), du Bleu Direct 199 (Direct Blue 199) et du Bleu Acide 185 (Acid Blue 185).

**7.** Une composition d'encre pour imprimante thermique à jet d'encre selon la revendication 6, dans laquelle ladite teinture comprend du Noir Alimentaire 2 (Food Black 2).

**8.** Une composition d'encre pour imprimante thermique à jet d'encre selon l'une des revendications précédentes, dans laquelle au moins la moitié desdits cations est du tétraméthylammonium.

**9.** Une composition d'encre pour imprimante thermique à jet d'encre selon l'une des revendications 1 à 7, dans laquelle substantiellement tous lesdits cations sont du lithium.

**10.** Un procédé pour augmenter la solubilité d'une teinture sans affecter de façon néfaste la kogation dans une composition d'encre pour imprimante thermique à jet d'encre comprenant un véhicule et la teinture, ledit véhicule comprenant environ 5 à 95 % d'eau, le reste étant au moins un glycol ou un glycol éther et ladite teinture comprenant des molécules ayant au moins un groupe fonctionnel chargé négativement par molécule, les groupes fonctionnels étant associés à des cations de sodium ou de potassium, le procédé comprenant l'étape consistant à remplacer au moins un quart des cations de sodium ou de potassium par des cations de lithium ou de tétraméthylammonium.

**11.** Utilisation d'une teinture ayant au moins un groupe fonctionnel chargé négativement par molécule, au moins un des groupes fonctionnels étant associé à des cations, et au moins un quart desdits cations étant du tétraméthylammonium ou du lithium, pour la préparation d'une encre pour imprimante thermique à jet d'encre, ladite encre comprenant en outre un véhicule comprenant environ 5 à 95 % d'eau, le reste étant au moins un glycol ou un glycol éther.